# DEMANDE DE BREVET EUROPEEN

(11) **EP 2 712 975 A1**
(43) Date de publication de la demande: **02.04.2014**
(21) Numéro de dépôt: 13306325.5
(22) Date de dépôt: 26.09.2013
(51) Int. Cl.: E04C 2/24, B32B 5/26, B32B 7/14

(54) **Complexe isolant, ajustable et à raccordement étanche, et procédé de pose de deux complexes**

(30) Priorité: 26.09.2012 FR 1259020
(71) Demandeur: ISO-Ouest, 47200 Marmande (FR)
(72) Inventeur: Breda, Sébastien, 17170 LA RONDE (FR)
(74) Mandataire: Fantin, Laurent

(57) **Abrégé**

L'objet de l'invention est un complexe isolant caractérisé en ce qu'il comprend un panneau (10) rigide sur lequel est rapporté un panneau (12) de fibres à faible densité.

L'invention couvre aussi le procédé de pose de deux complexes juxtaposés.

## Description

La présente invention concerne un complexe isolant à propriétés combinées, ajustable et à raccordement étanche.

L'invention couvre aussi le procédé de pose.

On connaît les panneaux d'isolation à base de fibres de verre, de laine de roche ou de fibres naturelles qui sont rapportées sur un film du type en fibres de cellulose formant pare-vapeur pour permettre la manipulation, le stockage par enroulement, tout en permettant les échanges gazeux.

Ces panneaux d'isolation à base de fibres de verre présentent une faible rigidité et doivent être maintenus dans une structure entre des rails par exemple ou contre des supports tels que des murs en béton, en briques, en parpaings, grâce à des moyens d'accrochage spécifiques car il faut assurer la retenue du panneau qui ne présente pas de rigidité suffisante, ceci sur toute sa surface.

On connaît aussi des panneaux rigides qui sont utilisés également appliqués contre des supports tels que des murs en béton, en briques, en parpaings par collage ou par fixation grâce à des pions rapportés sur lesdits murs.

Ces panneaux peuvent aussi être utilisés en plafond, rampant ou plat moyennant des dispositifs de fixation adaptés.

Dans les constructions actuelles, le confort prend des formes complexes. En effet, il est non seulement nécessaire d'assurer une isolation thermique qui est le premier paramètre concerné mais aussi de procurer un confort acoustique qui est un paramètre également important, notamment lorsque lesdites constructions sont à proximité d'une source de bruit comme la circulation urbaine.

On connaît le brevet US 5 547 743 qui propose des panneaux, notamment pour cloisons qui comprennent une mince couche d'un matériau rigide sur lequel est rapporté un matériau fibreux moins dense pour augmenter l'épaisseur. Il est indiqué que cette augmentation d'épaisseur procure aussi un amortissement acoustique.

La composition de ces panneaux consiste à superposer plusieurs couches pour obtenir un sandwich avec des feuilles thermoplastiques double face comme lien, ce ci sur toute la surface des couches.

Le but de la présente invention est de procurer un double confort pour le moins mais avec un effet de synergie avec des moyens pour réaliser des surfaces de grandes dimensions et donc de pouvoir juxtaposer les panneaux.

C'est l'objet de la présente invention de proposer un tel complexe isolant, sous forme de panneaux prêts à pose mais il est nécessaire de prévoir un complexe isolant qui autorise l'ajustement en largeur et qui permet de réaliser une étanchéité lors du jointage des panneaux de ce complexe au cours de la pose, après ajustement en largeur.

La présente invention est maintenant décrite en détail, en regard des dessins annexés qui concernent uniquement un mode de réalisation particulier préférentiel, non limitatif.

Sur ces dessins, les différentes figures représentent :
- Figure 1 : un complexe isolant selon la présente invention, vu en perspective, avec un arrachement partiel,
- Figure 2 : le complexe de la figure 1, vu de dessus,
- Figure 3 : le complexe de la figure 2 vu en coupe selon la ligne 3-3,
- Figure 4 : le complexe de la figure 2 vu en coupe selon la ligne 4-4,
- Figures 5A et 5B : assemblage de deux complexes juxtaposés avant juxtaposition et après juxtaposition.

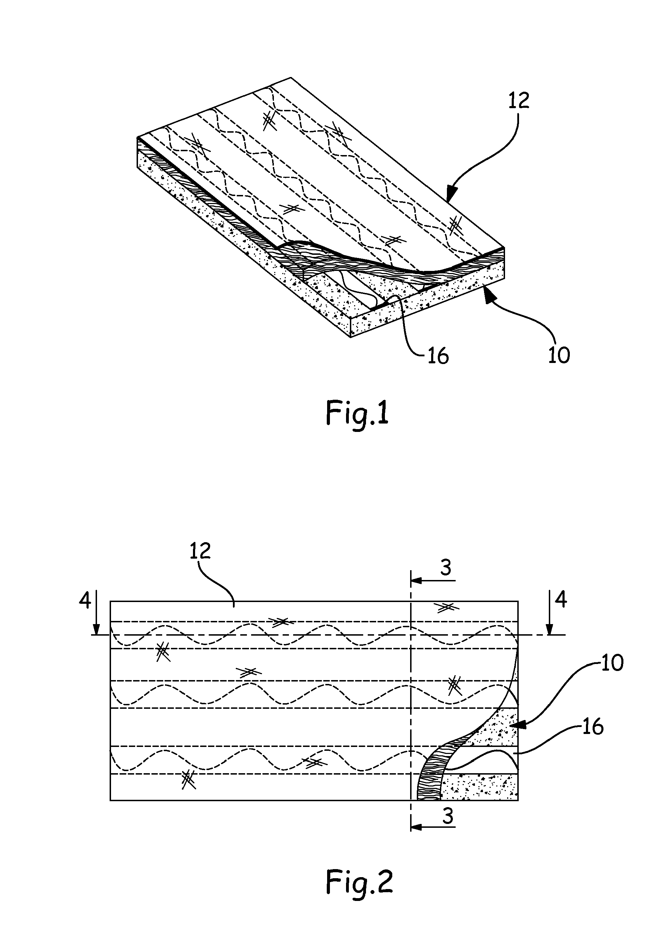

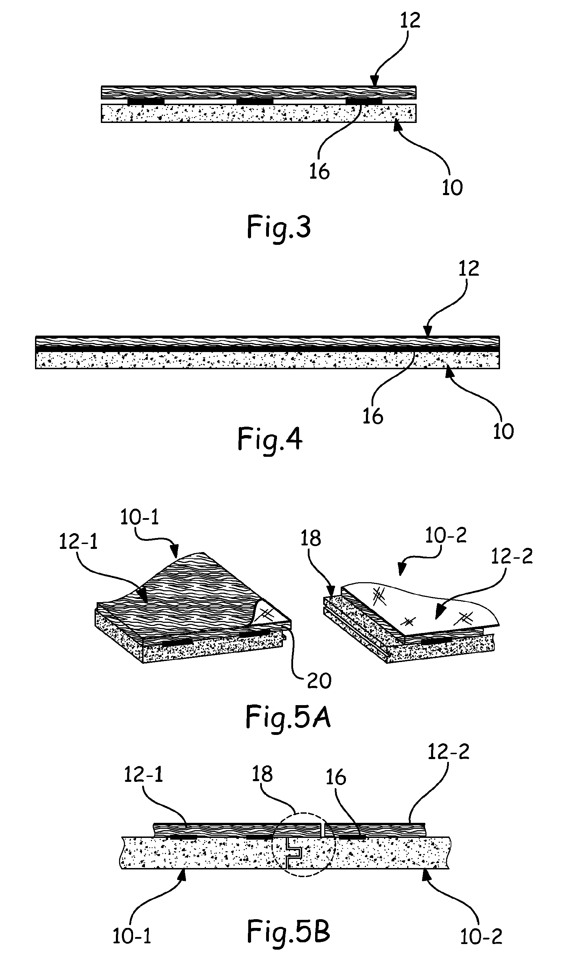

La présente invention consiste à combiner un panneau 10 dit rigide tel qu'un panneau de polyuréthane ou de polystyrène ou encore de fibres compactées avec un panneau 12 de fibres à faible densité. Une réalisation est représentée sur les figures 1 à 4.

Le panneau 10 rigide présente un fort coefficient d'isolation thermique et assure la rigidité du complexe. Ce type de panneaux présente un coefficient d'isolation thermique caractérisé par sa faible conductivité thermique de l'ordre de 0,5 à 0,15 W/m²°C et une résistance thermique R de 0,040 à 0,030/mm d'isolant.

Ce panneau 10 rigide ne subit aucune déformation au cours du temps, aucune compression.

Il peut être simplement rapporté par collage sur son support.

Par contre le panneau 12 à base de fibres, de faible densité, n'a pas de tenue mécanique suffisante pour être disposé sur un support.

Un tel panneau de fibres à faible densité doit donc être associé à une structure. La présente invention propose de le rapporter par collage sur le panneau rigide comme montré sur les différentes figures.

Pour donner une valeur, la densité d'un tel panneau est comprise entre 10 et 35 kg/m³.

Un tel panneau, par exemple en laine de verre, assure une isolation thermique complémentaire car son coefficient lambda est compris entre 0,035 et 0,030. La faible densité implique un volume d'air emprisonné donc un frein aux échanges thermiques.

De plus, ce panneau 12 de fibres à faible densité assure une isolation phonique plus importante que les panneaux 10 rigides car la transmission des sons est perturbée par l'air et par les fibres qui, nécessairement, amortissent les sons. On sait aussi que le changement de matière constitue une solide barrière à la propagation des systèmes ondulatoires que constituent les sons.

Cette combinaison de matériaux génère un effet de synergie certain.

Le panneau 12 de fibres à faible densité est rapporté par collage par la face fibreuse ne comportant pas de film pare vapeur 14.

Le complexe sous forme de panneaux est donc aisément manipulable et conserve toutes ses caractéristiques jusqu'à la pose.

Un problème soulevé par la pose est l'ajustement en largeur de ces panneaux, en fonction de la largeur du support à isoler.

En effet, il est nécessaire de couper ce complexe pour ajuster la largeur.

Dans le cas où il est nécessaire de juxtaposer deux bords coupés, le plan de coupe réalisé sur chantier peut générer des ponts thermiques mais surtout des circulations acoustiques car il existe des jours acoustiques.

La présente invention propose de n'assurer qu'un collage partiel du panneau 12 de fibres à faible densité sur le panneau 10 rigide.

Plus particulièrement, le collage partiel est réalisé suivant des bandes 16, laissant libres des zones de coupe du panneau rigide 10 et du panneau 12 de fibres à faible densité car entre les bandes, les deux panneaux sont dissociés. Ainsi, il est possible de réaliser une chicane 18 à la pose de deux panneaux juxtaposés.

Ainsi suivant le procédé :
- on coupe le premier panneau 10-1 rigide avec une largeur inférieure à celle du premier panneau 12-1 de fibres à faible densité, en dehors d'une bande 16 de collage,
- on libère une langue 20 de panneau 12-1 de fibres à faible densité
- on coupe le panneau 12-2 de fibres à faible densité moins large que le panneau 10-2 rigide,
- on assemble les deux panneaux 10-1, 10-2 par leurs tranches, la langue 20 du panneau 12-1 de fibre à faible densité venant se superposer à la surface du second panneau 10-2 rigide dégagée partiellement du panneau 12-2 de fibres à faible densité.

On note que le plan de joint des panneaux 10-1 et 10-2 rigides est décalé par rapport au plan de joint des panneaux 12-1 et 12-2 de fibres à faible densité. Selon un perfectionnement de la présente invention, le complexe voit la tranche de son panneau 10 rigide bouvetée, mâle ou femelle, afin de prévoir un emboîtement à chicane 18 y compris dans le panneau 10-1, 10-2 rigide lui-même. On comprend donc que le complexe selon l'invention permet de réaliser des jonctions de panneaux avec une double chicane tant au droit du panneau 10 rigide que du panneau 12 de fibres à faible densité et un décalage des chicanes.

Le complexe selon la présente est particulièrement attractif car il permet une manipulation aisée par les utilisateurs, il est réalisable industriellement de façon aisée également, il permet une pose à recouvrement par chicanage assurant ainsi une très bonne isolation tant thermique qu'acoustique.

Les opérations de bouvetage sont réalisables sur chantier, sans difficulté, car le matériau fibreux peut être découpé à la lame et le matériau rigide polyuréthane ou polystyrène ou fibreux haute densité peut être usiné avec une rainureuse simple le matériau étant rigide mais d'une faible dureté.

Bien entendu les complexes, même avant découpe, peuvent être réalisés en usine avec une bande 20 et un bouvetage sur les tranches.

## Revendications

1. Complexe isolant comprenant un panneau (10) rigide en matériau choisi parmi le polyuréthane, le polystyrène ou les fibres compressées sur lequel est rapporté un panneau (12) de fibres à faible densité, **caractérisé en ce que** le panneau (12) de fibres à faible densité est rapporté sur le panneau (10) rigide au moyen de bandes (16) de colle.

2. Complexe isolant selon la revendication 1, **caractérisé en ce que** le panneau (12) de fibres à faible densité présente une densité comprise entre 10 et 35 kg/m³.

3. Complexe isolant selon l'une quelconque des revendications précédentes, **caractérisé en ce que** le panneau (10) rigide est bouveté sur sa tranche, mâle ou femelle.

4. Procédé de pose juxtaposée de deux complexes (10-1, 10-2 ; 12-1, 12-2) isolants suivant l'une des revendications précédentes, **caractérisé en ce qu'il** comprend les étapes suivantes :
- on coupe le premier panneau (10-1) rigide avec une largeur inférieure à celle du premier panneau (12-1) de fibres à faible densité, en dehors d'une bande (16) de collage,
- on libère une langue (20) de panneau (12-1) de fibres à faible densité,
- on coupe le panneau (12-2) de fibres à faible densité moins large que le panneau (10-2) rigide,
- on assemble par leurs tranches les deux panneaux (10-1, 10-2), la langue (20) du panneau (12-1) de fibres à faible densité venant se superposer à la surface du second panneau (10-2) rigide dégagée partiellement du panneau (12-2) de fibres à faible densité.

5. Procédé de pose de deux complexes (10-1, 10-2 ; 12-1, 12-2) isolants suivant la revendication 4, **caractérisé en ce que** l'on procède à un bouvetage des chants des panneaux (10-1 et 10-2) rigides préalablement à leur assemblage.
